(19) Europäisches Patentamt
European Patent Office
Office européen des brevets

(11) **EP 4 329 023 A1**

(12) **EUROPEAN PATENT APPLICATION**

(43) Date of publication:
**28.02.2024 Bulletin 2024/09**

(21) Application number: **23193388.8**

(22) Date of filing: **25.08.2023**

(51) International Patent Classification (IPC):
**H01M 8/04029** (2016.01)   **H01M 8/04089** (2016.01)
**H01M 8/0444** (2016.01)   **H01M 8/04537** (2016.01)
**H01M 8/04746** (2016.01)   **H01M 8/2465** (2016.01)

(52) Cooperative Patent Classification (CPC):
**H01M 8/04455; H01M 8/04029; H01M 8/04089;
H01M 8/04552; H01M 8/04559; H01M 8/04753;
H01M 8/2465;** H01M 2250/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.08.2022   JP 2022135328
07.09.2022   JP 2022141838**

(71) Applicant: **KABUSHIKI KAISHA TOYOTA
JIDOSHOKKI
Kariya-shi, Aichi-ken 448-8671 (JP)**

(72) Inventors:
• **TOMIMOTO, Naoya**
  **Kariya-shi, 448-8671 (JP)**
• **KAKIMI, Yosuke**
  **Kariya-shi, 448-8671 (JP)**
• **NAKAMURA, Ken**
  **Kariya-shi, 448-8671 (JP)**
• **TACHIKAWA, Katsuyuki**
  **Kariya-shi, 448-8671 (JP)**
• **AKIMOTO, Wataru**
  **Kariya-shi, 448-8671 (JP)**

(74) Representative: **TBK
Bavariaring 4-6
80336 München (DE)**

(54) **FUEL CELL SYSTEM**

(57)    The present disclosure stabilizes power generation of a fuel cell stack (FCS) in an environment in which an oxygen concentration in a fuel cell system (1) readily decreases. In a case where it is detected that the oxygen concentration is lower than a predetermined concentration or where a phenomenon caused by the oxygen concentration being lower than the predetermined concentration is detected, processing to increase a flow rate of air supplied to the fuel cell stack (FCS) or processing to ventilate the interior of the fuel cell stack (FCS) by controlling an operation of a ventilation unit (F) is performed.

FIG. 3

**Description**

FIELD

The present disclosure relates to a fuel cell system.

BACKGROUND

Fuel cell systems include a fuel cell system that is provided to a vehicle or a generator.

Incidentally, in a case where a fuel cell system is provided to a vehicle in which an air supply port is not provided to the front surface of the vehicle and it is difficult to take in traveling wind, and in a case where the speed of the vehicle is relatively slow or a case where the fuel cell system is provided in a stationary generator, there is a risk that the outside air cannot be actively taken into the fuel cell system, that the oxygen concentration in the fuel cell system will decrease, and that the voltage of the fuel cell stack in the fuel cell system will be reduced.

Further, in the case where air in which the oxygen concentration has decreased due to power generation is not discharged from the fuel cell stack to outside the fuel cell system but is discharged into the fuel cell system, the discharged air is supplied to the fuel cell stack from an air compressor, and thus the voltage of the fuel cell stack will likely be reduced.

Therefore, it is conceivable to supply air to the fuel cell stack such that the flow rate of the air supplied to the fuel cell stack matches a target flow rate calculated using the oxygen concentration of the air inside the fuel cell system. JP 2004-273162 A exists as an example of a related technology.

In addition, providing a ventilation unit such as a fan to the fuel cell system in order to actively take outside air into the fuel cell system and discharge air discharged from the fuel cell stack to outside the fuel cell system may be considered. JP 2010-257580 A exists as an example of a related technology.

However, in a case where the ventilation unit is continuously driven in order to maintain the oxygen concentration in the fuel cell system, the fuel cell stack and an auxiliary machine are cooled more than necessary by the air flow generated by the ventilation unit, and the temperature of the fuel cell stack and the auxiliary machine deviates from a rated temperature range, and thus the power generation of the fuel cell stack will likely become unstable.

SUMMARY

An object according to one aspect of the present disclosure is to stabilize power generation of a fuel cell stack in an environment in which an oxygen concentration in a fuel cell system readily decreases.

A fuel cell system according to one embodiment of the present disclosure includes a fuel cell stack, an air compressor that supplies air to the fuel cell stack, and a control unit. The control unit includes a state detection unit that detects that an oxygen concentration is lower than a predetermined concentration or detects a phenomenon caused by the oxygen concentration being lower than the predetermined concentration. In a case where it is detected by the state detection unit that the oxygen concentration is lower than the predetermined concentration or where the phenomenon is detected, the control unit performs processing to increase a flow rate of air supplied to the fuel cell stack or processing to ventilate the interior of the fuel cell stack by controlling an operation of a ventilation unit.

Thus, the power generation of the fuel cell stack can be stabilized.

Further, the fuel cell system may include an auxiliary machine for causing the fuel cell stack to generate power, and the ventilation unit, wherein the state detection unit may be a voltage detection unit, and wherein the control unit may be configured to control operation of the ventilation unit according to a temperature of the fuel cell stack or the auxiliary machine in a normal mode, and drive the ventilation unit in a ventilation mode, and wherein the control unit may be configured to cause a transition from the normal mode to the ventilation mode when a voltage pertaining to the fuel cell stack becomes equal to or less than a first threshold value.

Thus, when the voltage of the fuel cell stack becomes equal to or lower than the first threshold due to the decrease in the oxygen concentration in the fuel cell system, the ventilation unit can be driven to ventilate the interior of the fuel cell system, and hence the outside air can be taken into the fuel cell system and the air discharged from the fuel cell stack can be discharged to outside the fuel cell system, and thus the decrease in the oxygen concentration in the fuel cell system can be suppressed. In a case where the voltage of the fuel cell stack is not equal to or less than the first threshold value, the operation of the ventilation unit can be controlled according to the temperature of the fuel cell stack or the auxiliary machine in the normal mode, and hence the temperature of the fuel cell stack or the auxiliary machine can be adjusted within a rated temperature range, and the power generation of the fuel cell stack can be stabilized.

Further, the control unit may be configured to drive the ventilation unit until a predetermined driving time elapses after causing the transition from the normal mode to the ventilation mode, and subsequently, when the voltage pertaining to the fuel cell stack becomes equal to or greater than a second threshold value larger than the first threshold value, to cause a transition from the ventilation mode to the normal mode.

Further, the voltage detection unit may be configured to detect the respective voltages of the plurality of fuel cells, and the control unit may be configured to set an average value of the voltages detected by the voltage detection unit as a voltage pertaining to the fuel cell stack.

Furthermore, the ventilation unit may be a fan that increases a heat radiation amount of a radiator that exchanges heat of a refrigerant, which is warmed by heat generation of the fuel cell stack, with air, and an exhaust port through which air is discharged from the fuel cell stack may be disposed on a leeward side of an air flow formed by the ventilation unit with respect to an intake port of the fuel cell stack.

Furthermore, the state detection unit may be an oxygen concentration detection unit, the control unit may be configured to control operations of the air compressor and the ventilation unit, and the control unit may be configured to execute at least one type of processing among processing to increase a flow rate of air supplied to the fuel cell system by controlling the operation of the air compressor and processing to ventilate the interior of the fuel cell system by controlling the operation of the ventilation unit, in a case where oxygen stoichiometry, which is a value obtained by multiplying the air stoichiometry of the fuel cell stack by a value obtained by dividing the oxygen concentration detected by the oxygen concentration detection unit by a standard oxygen concentration, is less than a target oxygen stoichiometry.

Thus, in a case where the oxygen stoichiometry is less than the target oxygen stoichiometry, at least one of the processing to increase the flow rate of the air supplied to the fuel cell stack and the processing to ventilate the interior of the fuel cell system can be executed, and hence the oxygen concentration of the air supplied to the fuel cell stack can be increased, and a reduction in the voltage of the fuel cell stack can be suppressed.

In addition, the control unit may be configured to execute the processing to increase the flow rate of the air in a case where the oxygen stoichiometry is less than the target oxygen stoichiometry and in a case where the flow rate of the air supplied to the fuel cell stack, which is necessary to increase the oxygen stoichiometry to the target oxygen stoichiometry, is equal to or less than an upper limit value of an allowable range for the flow rate of the air supplied to the fuel cell stack.

Furthermore, the ventilation unit may be a fan that increases a heat radiation amount of a radiator that exchanges heat of a refrigerant, which is warmed by heat generation of the fuel cell stack, with air.

Further, the fuel cell system may include a notification unit, and the control unit may be configured to cause the notification unit to issue notification to outside the fuel cell system to the effect that the oxygen concentration of the air outside the fuel cell system has decreased in a case where the oxygen concentration detected by the oxygen concentration detection unit is lower than a predetermined concentration after executing the processing to ventilate the interior of the fuel cell system.

BRIEF DESCRIPTION OF DRAWINGS

FIG. 1 is a view showing an application example of a fuel cell system according to a first embodiment;
FIG. 2 is a view showing another application example of a fuel cell system according to the first embodiment;
FIG. 3 is a flowchart illustrating an example of operation of a control unit at the time of mode switching;
FIG. 4A illustrates an arrangement example (part 1) of an intake port of an air compressor, an exhaust port of a fuel cell stack, a fan, and an opening provided in a housing of a fuel cell system;
FIG. 4B illustrates an arrangement example (part 2) of the intake port of the air compressor, the exhaust port of the fuel cell stack, the fan, and the opening provided in the housing of the fuel cell system;
FIG. 4C illustrates an arrangement example (part 3) of the intake port of the air compressor, the exhaust port of the fuel cell stack, the fan, and the opening provided in the housing of the fuel cell system;
FIG. 4D illustrates an arrangement example (part 4) of the intake port of the air compressor, the exhaust port of the fuel cell stack, the fan, and the opening provided in the housing of the fuel cell system;
FIG. 5 is a view showing an application example of a fuel cell system according to a second embodiment;
FIG. 6 is a view showing another application example of the fuel cell system according to the second embodiment;
FIG. 7 is a flowchart illustrating an example of the operation of the control unit according to an Example 1; and
FIG. 8 is a flowchart illustrating an example of the operation of the control unit according to an Example 2.

DESCRIPTION OF EMBODIMENTS

Hereinafter, embodiments will be described in detail with reference to the drawings.

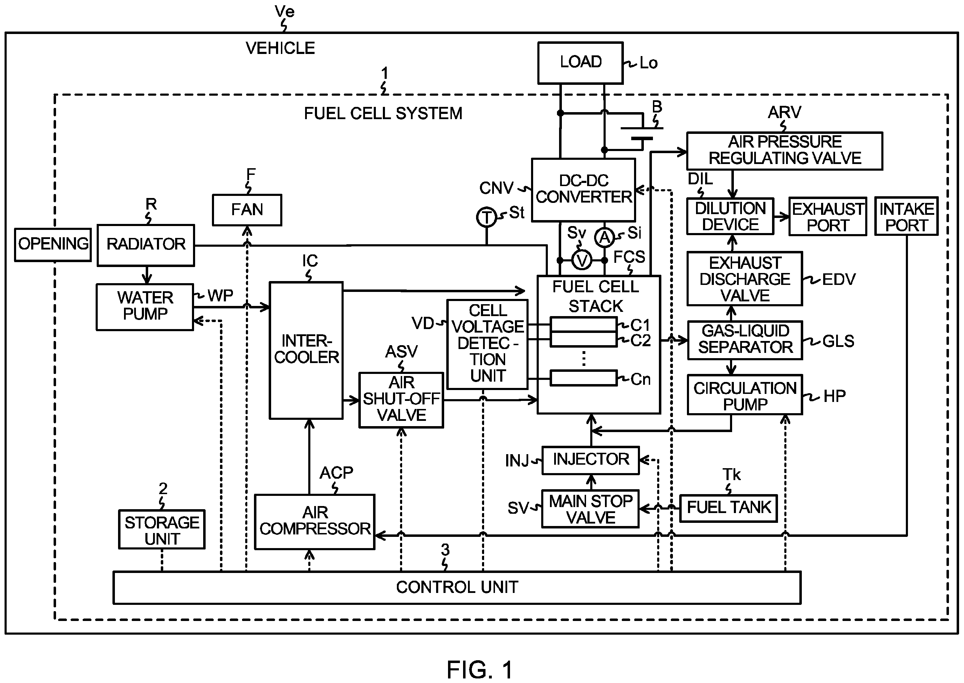

FIG. 1 is a view showing an application example of a fuel cell system according to a first embodiment.

In the application example of a fuel cell system 1 illustrated in FIG. 1, the fuel cell system 1 is provided to a vehicle Ve. For example, the vehicle Ve is an industrial vehicle such as a forklift. Furthermore, it is assumed that a load Lo such as an inverter for driving a travel motor is mounted in the vehicle Ve, and that power is supplied from the fuel cell system 1 to the load Lo. In addition, in the vehicle Ve, because an air supply port (not illustrated) is provided to a lateral surface of the vehicle Ve with respect to the forward direction of the vehicle Ve, or the traveling speed is relatively slow, it is assumed to be difficult to take the traveling wind into the vehicle Ve, and to be difficult to use the traveling wind to perform ventilation of the interior of the fuel cell system 1.

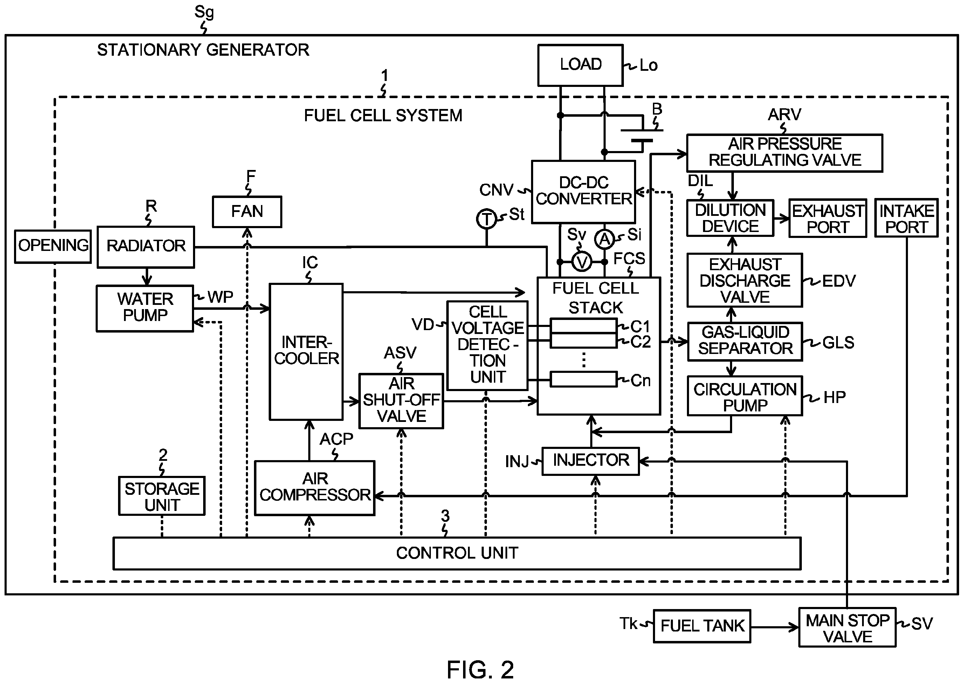

Further, FIG. 2 is a view showing another application example of a fuel cell system according to the first embodiment. Note that the fuel cell system 1 shown in FIG. 2 is similar to fuel cell system 1 shown in FIG. 1.

In the application example of the fuel cell system 1 illustrated in FIG. 2, the fuel cell system 1 is provided to a stationary generator Sg. For example, the stationary generator Sg is a generator that supplies power to the load Lo in cooperation with a commercial power supply, a solar power generator, or the like, and it is assumed that power is supplied from the fuel cell system 1 to the load Lo. In addition, because the stationary generator Sg is fixed in a predetermined location and does not move, it is assumed to be difficult to use the traveling wind to perform ventilation of the interior of the fuel cell system 1. That is, it is assumed that the fuel cell system 1 shown in FIG. 1 or FIG. 2 is in an environment where the oxygen concentration in the fuel cell system 1 is relatively low.

The fuel cell system 1 illustrated in FIG. 1 or 2 includes a fuel cell stack FCS, a cell voltage detection unit VD (voltage detection unit), a fuel tank Tk, a main stop valve SV, an injector INJ, a gas-liquid separator GLS, a circulation pump HP, an exhaust discharge valve EDV, a dilution device DIL, an air compressor ACP, an air pressure regulating valve ARV, and an air shut-off valve ASV.

The fuel cell system 1 illustrated in FIG. 1 or 2 includes a radiator R, a fan F (ventilation unit), water pump WP, an intercooler IC, a DC-DC converter CNV, a power storage device B, a voltage sensor Sv (voltage detection unit), a current sensor Si, a temperature sensor St, a storage unit 2, and a control unit 3.

The fuel cell stack FCS is a fuel cell formed by stacking a plurality of fuel cells C (fuel cells C1 to Cn), and generates electricity through an electrochemical reaction between hydrogen contained in hydrogen gas and oxygen contained in air. In general, the voltage of the fuel cell C is a voltage obtained by subtracting three types of overvoltages, namely a resistance overvoltage, an activation overvoltage, and a concentration overvoltage, from a logical electromotive force. A resistance overvoltage is a voltage derived from the difficulty of movement of electrons and protons in the fuel cell C. An activation overvoltage is a voltage derived from the difficulty of a hydrogen oxidation reaction at the anode of the fuel cell C and an oxygen reduction reaction at the cathode of the fuel cell C. A concentration overvoltage is a voltage originating from the difficulty of diffusing hydrogen gas and air in the fuel cell C. Therefore, when at least one of the resistance overvoltage, the activation overvoltage, and the concentration overvoltage increases, the voltage of the fuel cell stack FCS is reduced.

The cell voltage detection unit VD detects respective voltages V1 to Vn of fuel cells C1 to Cn, and sends the detected voltages V1 to Vn to the control unit 3.

The fuel tank Tk is a hydrogen gas storage container. The hydrogen gas stored in the fuel tank Tk is supplied to the fuel cell stack FCS via the main stop valve SV and the injector INJ.

The main stop valve SV is configured by an electromagnetic valve or the like, and supplies hydrogen gas to the injector INJ. In addition, the main stop valve SV blocks the supply of hydrogen gas to the injector INJ through operation control by the control unit 3. In a case where the fuel cell system 1 is provided to the vehicle Ve, the fuel tank Tk and the main stop valve SV are provided inside the vehicle Ve. In a case where the fuel cell system 1 is provided in the stationary generator Sg, the fuel tank Tk and the main stop valve SV are provided outside the stationary generator.

The injector INJ adjusts the flow rate of the hydrogen gas so that the pressure of the hydrogen gas supplied to the fuel cell stack FCS becomes constant.

The gas-liquid separator GLS separates hydrogen gas and liquid water that are discharged from the fuel cell stack FCS.

The circulation pump HP re-supplies the hydrogen gas separated by the gas-liquid separator GLS to the fuel cell stack FCS.

The exhaust discharge valve EDV sends the liquid water separated by the gas-liquid separator GLS to the dilution device DIL. The liquid water sent to the dilution device DIL is accumulated in a tank in the dilution device DIL. Air discharged from the fuel cell stack FCS through the air pressure regulating valve ARV merges, in the dilution device DIL, with hydrogen gas discharged from the exhaust discharge valve EDV, and the air is discharged from an exhaust port of the dilution device DIL into the fuel cell system 1. As described above, in the air discharged from the exhaust port of dilution device DIL, that is, the exhaust port of the fuel cell stack FCS, oxygen is consumed in the fuel cell stack FCS by power generation, and hence the oxygen concentration is lower than that of the air outside the fuel cell system 1.

The air compressor ACP takes in the air inside the fuel cell system 1 from an intake port, compresses the air taken in, and supplies the compressed air to the fuel cell stack FCS via the intercooler IC and the air shut-off valve ASV. Note that the compression rate of the air compressor ACP is controlled by adjusting the opening degree of the air pressure regulating valve ARV provided downstream of the fuel cell stack FCS.

The intercooler IC exchanges the heat of air that is at a high temperature due to compression with a refrigerant such as cooling water flowing through the intercooler IC.

The air shut-off valve ASV shuts off the supply of air to the fuel cell stack FCS through the operation control by the control unit 3.

The air pressure regulating valve ARV adjusts the pressure and flow rate of the air supplied to the fuel cell stack FCS.

The radiator R exchanges the heat of the refrigerant, which is warmed by the heat generated by the fuel cell stack FCS, with the air inside the fuel cell system 1.

The fan F increases the heat radiation amount of the radiator R. That is, the wind generated by driving of the fan F hits the radiator R and thus lowers the temperature of the radiator R. Note that a fan F' (not illustrated) or the like for cooling an auxiliary machine such as the power storage device B may be adopted as the fan serving as the ventilation unit for ventilating the interior of the fuel cell system 1, and the fan is not limited to the fan F (for example, a ventilating fan established separately from the fan F can be used).

The water pump WP supplies the refrigerant cooled by the radiator R to the fuel cell stack FCS via the intercooler IC.

The DC-DC converter CNV is connected to a subsequent stage of the fuel cell stack FCS and converts the voltage outputted from the fuel cell stack FCS into a predetermined voltage. In addition, the power outputted from the DC-DC converter CNV is supplied to the load Lo and auxiliary machines such as the circulation pump HP, the air compressor ACP, and the water pump WP.

The power storage device B includes a lithium ion capacitor or the like, and is connected between the DC-DC converter CNV and the load Lo.

In a case where the supply power corresponding to the difference between the power outputted from the DC-DC converter CNV and the total value of the power supplied to the auxiliary machines is greater than the required power required by the load Lo, the power corresponding to the required power in this supply power is supplied to the load Lo and the remaining power is supplied to the power storage device B. When power is supplied from the DC-DC converter CNV to the power storage device B, the power storage device B is charged, and a charging amount Ch of the power storage device B increases. In addition, in a case where the supply power corresponding to the difference between the power outputted from the DC-DC converter CNV and the total value of the power supplied to the auxiliary machines is less than the required power required by the load Lo, the supply power is supplied to the load Lo and the power shortfall is supplied from the power storage device B to the load Lo. When power is supplied from the power storage device B to the load Lo, the power storage device B is discharged, and the charging amount Ch of the power storage device B decreases. Note that the charging amount Ch is a charging rate [%] of the power storage device B (a ratio of a remaining capacity to a full charge capacity of the power storage device B), an open-circuit voltage [V] of the power storage device B when no current flows in the power storage device B, a closed-circuit voltage [V] of the power storage device B when a current flows in the power storage device B, or an integrated value [Ah] of the current flowing in the power storage device B, or the like.

The voltage sensor Sv includes a plurality of voltage dividing resistors and the like, detects a voltage Vfcs of the entire fuel cell stack FCS, and sends the detected voltage Vfcs to the control unit 3.

The current sensor Si includes a shunt resistor, a Hall element, and the like, detects a current Ifcs flowing from the fuel cell stack FCS to the DC-DC converter CNV, and sends the detected current Ifcs to the control unit 3.

The temperature sensor St includes a thermistor or the like, detects the temperature T of the refrigerant flowing from the fuel cell stack FCS to the radiator R, and sends the detected temperature T to the control unit 3. The control unit 3 estimates a temperature Tfcs of the fuel cell stack FCS based on the temperature T. Note that the temperature sensor St may be configured to directly detect the temperature Tfcs of the fuel cell stack FCS and transmit the detected temperature Tfcs to the control unit 3.

The storage unit 2 includes a RAM (Random Access Memory), a ROM (Read Only Memory), and the like. Note that the storage unit 2 stores a threshold value Vth1, a threshold value Vth2, and the like (described below).

The control unit 3 includes a microcomputer or the like. The control unit 3 is an electronic control unit with a CPU (Central Processing Unit), ROM (Read Only Memory), RAM ([Random Access Memory), and CAN (Controller Area Network) communication circuit, and the like. For example, various functions are actualized by the CPU loading a program stored in memory device 2 into RAM and executing the program loaded into RAM. The control unit 3 may be configured from a plurality of electronic units.

In addition, when causing the fuel cell stack FCS to generate power, the control unit 3 changes a target generated power Pt in a stepwise manner according to the charging amount Ch of the power storage device B.

In addition, when the fuel cell stack FCS is caused to generate power, the control unit 3 controls the operation of the auxiliary machine such that the generated power of the fuel cell stack FCS (the multiplied value of the current Ifcs and the voltage Vfcs) tracks the target generated power Pt. For example, when the fuel cell stack FCS is caused to generate power, the control unit 3 controls the operation of the auxiliary machine such that the difference between the generated power of the fuel cell stack FCS and the target generated power Pt becomes zero through proportional-integral (PI) control.

Further, when the fuel cell stack FCS is made to generate power, the control unit 3 changes the operation control of the fan F according to the mode type (the normal mode or ventilation mode).

That is, in the normal mode, the control unit 3 drives the fan F when the temperature Tfcs of fuel cell stack FCS becomes equal to or higher than a temperature threshold value Tth1, and stops the fan F when the temperature Tfcs becomes equal to or lower than a temperature threshold value Tth2. Note that the temperature threshold value Tth1 is, for example, a value obtained from an upper limit value for the rated temperature of the fuel cell C. Further, the temperature threshold value Tth2 is set to a value less than the temperature threshold value Tth1, for example, a value obtained by subtracting the detection error of the temperature sensor St from the temperature threshold value Tth1.

In addition, in a case where the fan F' (not illustrated) for cooling the auxiliary machine is adopted as the ventilation unit, the control unit 3 may be configured to drive the fan F' when the temperature of the auxiliary machine becomes equal to or higher than a temperature threshold value Tth1' and to stop the fan F' when the temperature of the auxiliary machine becomes equal to or less than a temperature threshold value Tth2' in the normal mode. Note that the temperature threshold value Tth1' is, for example, a value obtained from an upper limit value for the rated temperature of the auxiliary machine. Furthermore, the temperature threshold value Tth2' is set to a value less than the temperature threshold value Tth1', for example, a value obtained by subtracting, from the temperature threshold value Tth1', a detection error of a temperature sensor (not illustrated) that detects the temperature of the auxiliary machine.

In addition, the control unit 3 actively drives the fan F in the ventilation mode. For example, in the ventilation mode, the control unit 3 forcibly drives the fan F so as to satisfy the following Formula 1. Note that it is assumed that the wind (air flow) generated by the fan F is discharged to outside the fuel cell system 1 through an opening provided in a housing (broken-line frame illustrated in FIG. 1) surrounding fuel cell system 1.

Predetermined driving amount = wind speed [m/sec] of fan F $\times$ surface area [$m^2$] of opening provided in housing surrounding fuel cell system 1 $\times$ driving time t[sec] of fan F > volume [$m^3$] of housing surrounding fuel cell system 1... Formula 1

Note that, in the ventilation mode, the control unit 3 may compare the rotational speed of the fan F when the above Formula 1 is satisfied with the rotational speed of the fan F when the temperature Tfcs becomes equal to or higher than the temperature threshold value Tth1, and drive the fan F at the higher rotational speed.

In the ventilation mode, the control unit 3 may change the rotational speed of the fan F according to the voltage V pertaining to the fuel cell stack FCS. In this case, it is preferable to increase the rotational speed of the fan F as the voltage V pertaining to the fuel cell stack FCS becomes lower.

The control unit 3 switches between the normal mode and the ventilation mode according to the voltage pertaining to the fuel cell stack FCS.

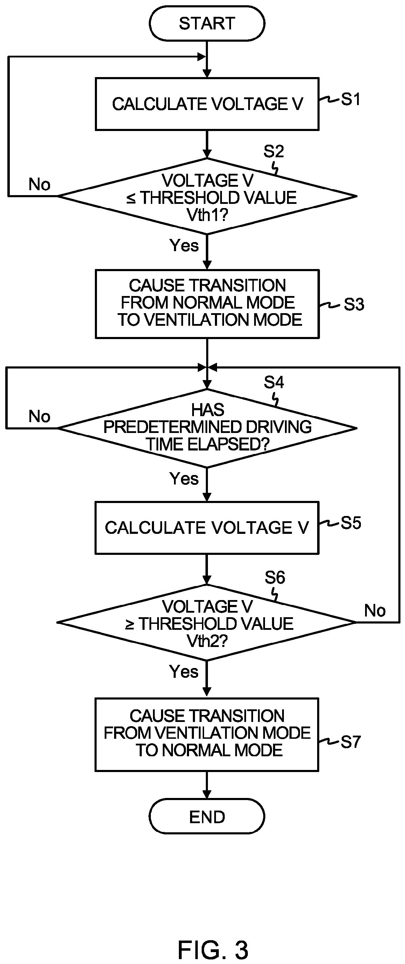

FIG. 3 is a flowchart illustrating an example of operation of the control unit 3 at the time of mode switching.

First, the control unit 3 calculates the voltage V pertaining to the fuel cell stack FCS (step S1). For example, the control unit 3 sets an average value of the voltages V1 to Vn detected by the cell voltage detection unit VD as a voltage V pertaining to the fuel cell stack FCS. Alternatively, the control unit 3 sets the voltage Vfcs detected by the voltage sensor Sv as the voltage V pertaining to the fuel cell stack FCS.

Next, in a case where the voltage V calculated in step S1 is greater than the threshold value Vth1 (first threshold value) (step S2: No), the control unit 3 executes the processing of steps S1 and S2 again, and when the voltage V calculated in step S1 becomes equal to or less than the threshold value Vth1 (step S2: Yes), the control unit 3 causes a transition from the normal mode to the ventilation mode (step S3). As described above, in a case where the voltage V calculated in step S1 becomes equal to or less than the threshold value Vth1, it can be estimated that the oxygen concentration in the fuel cell system 1 is relatively low, and it is assumed that it is necessary to increase the oxygen concentration in the fuel cell system 1 by actively driving the fan F to ventilate the interior of the fuel cell system 1. The processing of step S2, which is executed when the result of step S2 is "Yes" and which is actualized by the control unit 3 executing a control program, corresponds to the detection by the state detection unit or the oxygen concentration detection unit that the oxygen concentration is lower than the predetermined concentration. The processing of step S3, which is actualized by the control unit 3 executing the control program, corresponds to the process of ventilating interior of the fuel cell stack by controlling the operation of the ventilation unit in case where the state detection unit or the oxygen concentration detection unit detects that the oxygen concentration is lower than the predetermined concentration.

Next, the control unit 3 maintains the ventilation mode (a state in which the fan F is continuously driven) until a predetermined driving time (for example, the aforementioned driving time t) elapses after causing the transition from the normal mode to the ventilation mode, and when the predetermined driving time elapses (step S4: Yes), the control unit 3 calculates the voltage V pertaining to the fuel cell stack FCS (step S5).

Then, in a case where the voltage V calculated in step S5 is less than the threshold value Vth2 (second threshold value) (step S6: No), the control unit 3 executes the processing of steps S4 to S6 again, and when the voltage V calculated in step 5 becomes equal to or higher than the threshold value Vth2 (step S6: Yes), the control unit 3 causes a transition from the ventilation mode to the normal mode (step S7). As described above, in a case where the voltage V calculated in step S5 is equal to or higher than the threshold value Vth2, it can be estimated that the oxygen concentration in the fuel cell system 1 has returned to a normal oxygen concentration, and it is assumed that the fan F does not need to be actively driven for ventilation of the interior of the fuel cell system 1.

Note that the threshold value Vth2 is the voltage V calculated when the oxygen concentration in fuel cell system 1 is the normal oxygen concentration. In addition, the threshold value Vth1 is a value less than the threshold value Vth2, for example, a value obtained by subtracting a detection error of the cell voltage detection unit VD or the voltage sensor Sv from the threshold value Vth2. As described above, by setting the threshold value Vth1 and the threshold value Vth2 to mutually different values, when the voltage V becomes greater than the threshold value Vth1 after the transition from the normal mode to the ventilation mode, the frequent switching between the normal mode and the ventilation mode can be suppressed in comparison with the case where the transition from the ventilation mode to the normal mode is performed, and hence the power generation of the fuel cell stack FCS can be stabilized.

Incidentally, the oxygen concentration in the atmosphere (the oxygen concentration of the air outside the fuel cell system 1) is typically about 21[%], but the oxygen concentration of the air discharged from the fuel cell stack FCS due to oxygen consumption through power generation is less than the oxygen concentration in the atmosphere. Therefore, in a case where the air compressor ACP sucks in the air discharged from the fuel cell stack FCS, the oxygen concentration of the air supplied from the air compressor ACP to the fuel cell stack FCS becomes relatively low, and hence the concentration overvoltage increases and the voltage V pertaining to the fuel cell stack FCS is reduced.

In addition, in a case where the fuel cell system 1 is provided to a vehicle Ve in which the air supply port is provided on a lateral surface or the vehicle Ve in which the traveling speed is relatively slow, or in a case where the fuel cell system 1 is provided in the stationary generator Sg, the outside air cannot be actively taken into the fuel cell system 1, and the oxygen concentration of the air supplied from the air compressor ACP to the fuel cell stack FCS becomes relatively low, and hence the concentration overvoltage increases and the voltage V pertaining to the fuel cell stack FCS is reduced.

Therefore, in the fuel cell system 1 according to the first embodiment, when the voltage V pertaining to the fuel cell stack FCS becomes equal to or less than the threshold value Vth1, the fan F is actively driven to ventilate the interior of the fuel cell system 1. Thus, the outside air can be taken into the fuel cell system 1, and the air discharged from the fuel cell stack FCS can be discharged to outside the fuel cell system 1, and hence the decrease in the oxygen concentration in the fuel cell system 1 can be suppressed, and the decrease in the oxygen concentration of the air supplied to the fuel cell stack FCS can be suppressed. In a case where the voltage V pertaining to the fuel cell stack FCS is not equal to or less than the threshold value Vth1, the operation of the fan F can be controlled according to the temperature Tfcs of the fuel cell stack FCS in the normal mode, or the operation of the fan F' can be controlled according to the temperature of the auxiliary machine in the normal mode, and hence the temperature Tfcs of the fuel cell stack FCS or the temperature of the auxiliary machine can be adjusted within a rated temperature range, and the power generation of the fuel cell stack FCS can be stabilized.

In general, when the oxygen concentration in the fuel cell system 1 decreases, the respective voltages V1 to Vn of the fuel cells C are also reduced. Therefore, as per the fuel cell system 1 according to the first embodiment, by setting the average value of voltages V1 to Vn of the respective fuel cells C to the voltage V pertaining to the fuel cell stack FCS, ventilation in the fuel cell system 1 can be prevented from being actively performed in a case where the voltage V is greater than the threshold value Vth1, that is, in a case where voltages V1 to Vn of the respective fuel cells C are not relatively low. Thus, ventilation in the fuel cell system 1 can be suppressed in a case where the voltage of fuel cell stack FCS is reduced due to factors other than a reduction in the oxygen concentration in the fuel cell system 1. That is, because unnecessary ventilation of the interior of the fuel cell system 1 is suppressed, the power generation of the fuel cell stack FCS can be further stabilized.

Further, in the case where the average value of voltages V1 to Vn of the respective fuel cells C is set to the voltage V pertaining to the fuel cell stack FCS, even if the number of fuel cells C changes and the voltage Vfcs of the entire fuel cell stack FCS changes, the threshold value Vth1 and threshold value Vth2 do not need to be significantly changed. Therefore, even in a case where the number of cells constituting the fuel cell stack FCS is increased or reduced, for example, flexible handling can be performed. Thus, the versatility of fuel cell system 1 can be improved.

<Arrangement Example of Exhaust Port or Fan F of Fuel Cell Stack FCS>

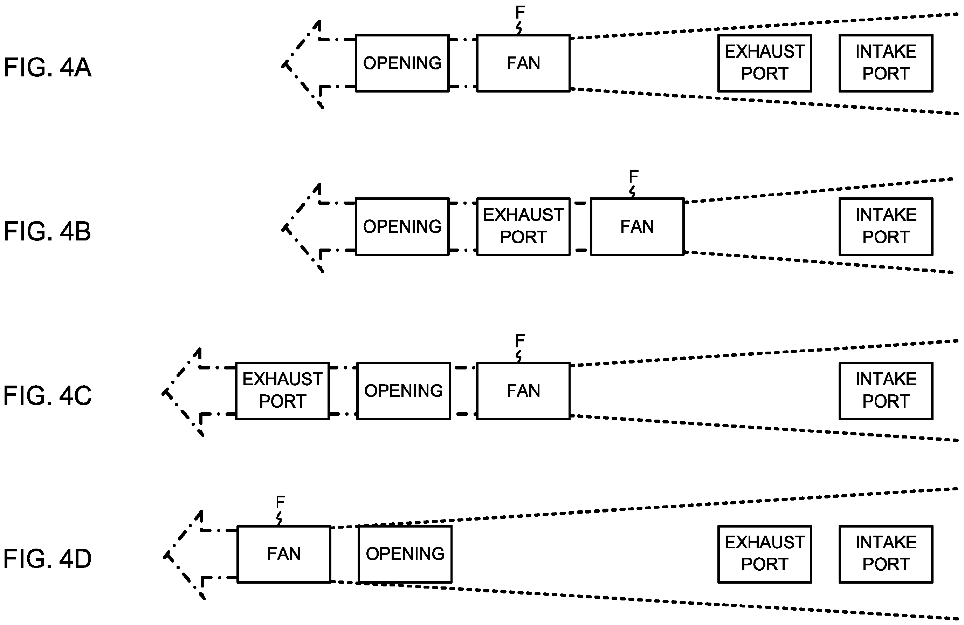

FIGS. 4A to 4D illustrate respective arrangement examples of the intake port of the air compressor ACP, the exhaust port of the fuel cell stack FCS, the fan F, and the opening provided in the housing of the fuel cell system 1. Further, the broken lines illustrated in FIGS. 4A to 4D indicate the flow of air drawn into the fan F, and the dot-chain lines illustrated in FIGS. 4A to 4D indicate the flow of air pushed out from the fan F. It is also assumed that the flow of air drawn into the fan F has relatively low directivity, and that the flow of air sent out from the fan F has relatively high directivity.

In the arrangement example illustrated in FIG. 4A, the intake port of the air compressor ACP, the exhaust port of the fuel cell stack FCS, the fan F, and the opening provided in the housing of the fuel cell system 1 are arranged in that order. In this case, the air discharged from the exhaust port is delivered from the fan F along with the flow of the air drawn into the fan F, and is discharged to outside the fuel cell system 1 through the opening. In addition, in the arrangement example illustrated in FIG. 4A, because the exhaust port is arranged on the leeward side of the air flow generated by the fan F with respect to the intake port, it is possible to prevent the air discharged from the exhaust port from being sucked into the intake port.

In the arrangement example illustrated in FIG. 4B, the intake port of the air compressor ACP, the fan F, the exhaust port of the fuel cell stack FCS, and the opening provided in the housing of the fuel cell system 1 are arranged in that order. In this case, the air discharged from the exhaust port rides on the air pushed out from the fan F and is discharged to outside the fuel cell system 1 through the opening. In addition, in the arrangement example illustrated in FIG. 4B, because the exhaust port is arranged on the leeward side of the air flow generated by the fan F with respect to the intake port, it is possible to prevent the air discharged from the exhaust port from being sucked into the intake port.

In the arrangement example illustrated in FIG. 4C, the intake port of the air compressor ACP, the fan F, the opening provided in the housing of the fuel cell system 1, and the exhaust port of the fuel cell stack FCS are arranged in that order. In this case, the air discharged from the exhaust port is discharged outside the fuel cell system 1, and is then separated from the fuel cell system 1 by riding on the air pushed out from the fan F through the opening. In addition, in the arrangement example illustrated in FIG. 4C, because the exhaust port is arranged on the leeward side of the air flow generated by the fan F with respect to the intake port, it is possible to prevent the air discharged from the exhaust port from being sucked into the intake port.

In the arrangement example illustrated in FIG. 4D, the intake port of the air compressor ACP, the exhaust port of the fuel cell stack FCS, the opening provided in the housing of the fuel cell system 1, and the fan F are arranged in that order. In this case, the air discharged from the exhaust port rides on the air drawn into the fan F and is discharged to outside the fuel cell system 1 through the opening. In addition, in the arrangement example illustrated in FIG. 4D, because the exhaust port is arranged on the leeward side of the air flow generated by the fan F with respect to the intake port, it is possible to prevent the air discharged from the exhaust port from being sucked into the intake port.

According to the arrangement examples illustrated in FIGS. 4A to 4D, because the exhaust port is arranged on the leeward side of the air flow generated by the fan F with respect to the intake port, the air discharged from the exhaust port can be prevented from being supplied to the fuel cell stack FCS through the intake port of the air compressor ACP, and hence the decrease in the oxygen concentration of the air supplied to the fuel cell stack FCS can be suppressed, and the decrease in the oxygen concentration in the fuel cell system 1 can be further suppressed.

In the case where the air discharged from the exhaust port is discharged to outside the fuel cell system 1 by riding on the air drawn into the fan F, because the directivity of the flow of the air drawn into the fan F is relatively low, the exhaust port is desirably disposed as close as possible to the fan F in cases where the layout in the fuel cell system 1 is not limited. Thus, air discharged from the exhaust port can be efficiently discharged to outside the fuel cell system 1.

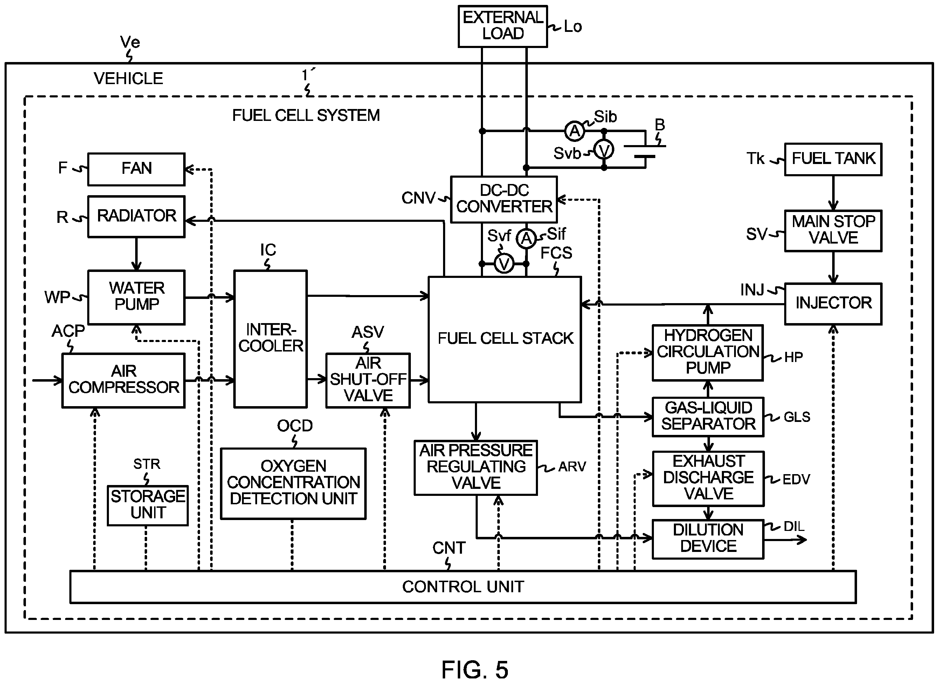

FIG. 5 is a view showing an application example of a fuel cell system according to a second embodiment.

In the application example of a fuel cell system 1' illustrated in FIG. 5, the fuel cell system 1' is provided to a vehicle Ve. For example, the vehicle Ve is an industrial vehicle such as a forklift. Furthermore, it is assumed that the load Lo such as an inverter for driving a travel motor is mounted in the vehicle Ve, and that power is supplied from the fuel cell system 1' to the load Lo. In addition, in the vehicle Ve, because the air supply port (not illustrated) is not provided to the front surface of the vehicle Ve, or because the traveling speed of the vehicle Ve is relatively slow even when an air supply port is provided to the front surface of the vehicle Ve, it is assumed to be difficult to use the traveling wind to perform ventilation of the interior of the fuel cell system 1'.

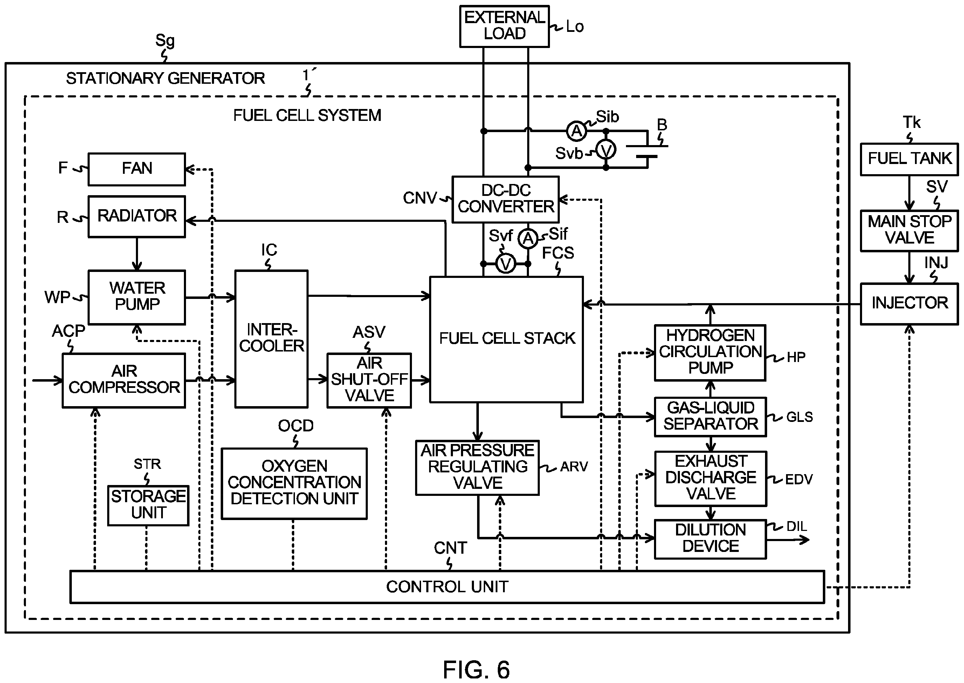

Further, FIG. 6 is a view showing another application example of the fuel cell system according to the second embodiment. Note that the fuel cell system 1' shown in FIG. 6 is similar to the fuel cell system 1' shown in FIG. 5.

In the application example of the fuel cell system 1' illustrated in FIG. 6, the fuel cell system 1' is provided to a stationary generator Sg. For example, the fuel cell system 1' supplies power to the load Lo provided outside the stationary generator Sg in cooperation with a commercial power supply, a solar power generator, or the like. In addition, the configuration is such the stationary generator Sg is installed in a certain location and does not move from that location, and hence it is assumed to be difficult to use the traveling wind to perform ventilation of the interior of the fuel cell system 1'. Further, in a case where the stationary generator Sg is installed in a building having few windows or in a room not provided with a ventilation system, it is assumed to be more difficult to perform ventilation of the interior of the fuel cell system 1'.

That is, it is assumed that the fuel cell system 1' illustrated in FIG. 5 or 6 is in an environment in which the oxygen concentration of the air supplied to the fuel cell stack FCS is relatively low.

The fuel cell system 1' illustrated in FIG. 5 or 6 includes a fuel cell stack FCS, a fuel tank Tk, a main stop valve SV, an injector INJ, a gas-liquid separator GLS, a hydrogen circulation pump HP, an exhaust discharge valve EDV, a dilution device DIL, an air compressor ACP, an air pressure regulating valve ARV, and an air shut-off valve ASV.

The fuel cell system 1' illustrated in FIG. 5 or 6 includes a radiator R, a fan F (ventilation unit), a water pump WP, an intercooler IC, a DC-DC converter CNV, a power storage device B, a voltage sensor Svb, a current sensor Sib, a voltage sensor Svf, a current sensor Sif, an oxygen concentration detection unit OCD, a storage unit STR, and a control unit CNT.

The fuel cell stack FCS is a fuel cell formed by stacking a plurality of fuel cells, and generates electricity through an electrochemical reaction between hydrogen contained in hydrogen gas and oxygen contained in air. In general, the voltage of the fuel cell is a voltage obtained by subtracting three types of overvoltages, namely a resistance overvoltage, an activation overvoltage, and a concentration overvoltage, from a logical electromotive force. Therefore, when at least one of the resistance overvoltage, the activation overvoltage, and the concentration overvoltage increases, the voltage of the fuel cell stack FCS is reduced. Note that a resistance overvoltage is a voltage derived from the difficulty of movement of electrons and protons in the fuel cell. An activation overvoltage is a voltage derived from the difficulty of a hydrogen oxidation reaction at the anode of the fuel cell and an oxygen reduction reaction at the cathode of the fuel cell. A concentration overvoltage is a voltage originating from the difficulty of diffusing hydrogen gas and air in the fuel cell.

The fuel tank Tk is a hydrogen gas storage container. The hydrogen gas stored in the fuel tank Tk is supplied to the fuel cell stack FCS via the main stop valve SV and the injector INJ.

The main stop valve SV is configured by an electromagnetic valve or the like, and supplies hydrogen gas to the injector INJ. In addition, the main stop valve SV blocks the supply of hydrogen gas to the injector INJ through operation control by the control unit CNT.

The injector INJ adjusts the flow rate of the hydrogen gas so that the pressure of the hydrogen gas supplied to the fuel cell stack FCS becomes constant. Note that, in a case where the fuel cell system 1' is provided to the vehicle Ve, the fuel tank Tk, the main stop valve SV, and the injector INJ are provided inside the vehicle Ve. In a case where the fuel cell system 1' is provided to the stationary generator Sg, the fuel tank Tk, the main stop valve SV, and the injector INJ are provided outside the stationary generator Sg.

The gas-liquid separator GLS separates hydrogen gas and liquid water that are discharged from the fuel cell stack FCS.

The hydrogen circulation pump HP re-supplies the hydrogen gas separated by the gas-liquid separator GLS to the fuel cell stack FCS.

The exhaust discharge valve EDV sends the liquid water separated by the gas-liquid separator GLS to the dilution device DIL. The liquid water sent to the dilution device DIL is accumulated in a tank (not illustrated) in the dilution device DIL. Further, air discharged from the fuel cell stack FCS through the air pressure regulating valve ARV merges, in the dilution device DIL, with hydrogen gas discharged from the exhaust discharge valve EDV, and the air is discharged from the dilution device DIL into the fuel cell system 1'. As described above, because oxygen is consumed in the air discharged from the dilution device DIL by the power generation of the fuel cell stack FCS, the oxygen concentration is assumed to be lower than that of the air outside the fuel cell system 1' (the vehicle Ve or the stationary generator Sg).

The air compressor ACP compresses the air inside the fuel cell system 1', and supplies the compressed air to the fuel cell stack FCS via the intercooler IC and the air shut-off valve ASV. Note that it is assumed that the flow rate of the air supplied from the air compressor ACP to the fuel cell stack FCS increases as the load of the air compressor ACP (the rotational speed of the motor) increases.

The intercooler IC exchanges the heat of air that is at a high temperature due to compression by the air compressor ACP with a refrigerant such as cooling water flowing through the intercooler IC.

The air shut-off valve ASV shuts off the supply of air to the fuel cell stack FCS through the operation control by the control unit CNT.

The air pressure regulating valve ARV adjusts the pressure of the air supplied to the fuel cell stack FCS by the operation control of the control unit CNT.

The radiator R exchanges the heat of the refrigerant, which is warmed by the heat generated by the fuel cell stack FCS, with air inside the fuel cell system 1'.

The fan F increases the heat radiation amount of the radiator R. That is, the wind generated by driving of the fan F hits the radiator R and thus lowers the temperature of the radiator R. In addition, the fan F functions as a ventilation unit that takes air outside the fuel cell system 1' into the fuel cell system 1' and discharges air in the fuel cell system 1' to outside the fuel cell system 1', that is, a ventilation unit that ventilates the interior of the fuel cell system 1'. Note that the ventilation unit may employ a fan (not illustrated) or the like for cooling an auxiliary machine such as the power storage device B, and is not limited to the fan F. In a case where the fan F is adopted as the ventilation unit, it is not necessary to newly provide the ventilation unit to a fuel cell system 1', and the fan F can be used as the ventilation unit, and hence an increase in the manufacturing costs of the fuel cell system 1' can be suppressed.

The water pump WP supplies the refrigerant cooled by the radiator R to the fuel cell stack FCS via the intercooler IC.

The DC-DC converter CNV is connected to a subsequent stage of the fuel cell stack FCS and converts the voltage outputted from the fuel cell stack FCS into a predetermined voltage. In addition, the power outputted from the DC-DC converter CNV is supplied to the load Lo and auxiliary machines such as the hydrogen circulation pump HP, the air compressor ACP, and the water pump WP.

The power storage device B includes a lithium ion capacitor or the like, and is connected between the DC-DC converter CNV and the load Lo.

In a case where the supply power corresponding to the difference between the power outputted from the DC-DC converter CNV and the total value of the power supplied to the auxiliary machines is greater than the required power required by the load Lo, the power corresponding to the required power in this supply power is supplied to the load Lo and the remaining power is supplied to the power storage device B. When power is supplied from the DC-DC converter CNV to the power storage device B, the power storage device B is charged, and a charging amount Ch of the power storage device B increases. In addition, in a case where the supply power corresponding to the difference between the power outputted from the DC-DC converter CNV and the total value of the power supplied to the auxiliary machines is less than the required power required by the load Lo, the supply power is supplied to the load Lo and the power shortfall is supplied from the power storage device B to the load Lo. When power is supplied from the power storage device B to the load Lo, the power storage device B is discharged, and the charging amount Ch of the power storage device B decreases. Note that the charging amount Ch is a charging rate [%] of the power storage device B (a ratio of a remaining capacity to a full charge capacity of the power storage device B), a voltage Vb[V] of the power storage device B when no current flows in the power storage device B, a voltage Vb[V] of the power storage device B when a current flows in the power storage device B, or an integrated value [Ah] of the current Ib flowing in the power storage device B, or the like.

The voltage sensor Svb includes a plurality of voltage dividing resistors and the like, detects the voltage Vb of the power storage device B, and sends the detected voltage Vb to the control unit CNT.

The current sensor Sib includes a shunt resistor, a Hall element, or the like, detects a current Ib flowing through the power storage device B, and sends the detected current Ib to the control unit CNT.

The voltage sensor Svf includes a plurality of voltage dividing resistors, detects the voltage Vf of the entire fuel cell stack FCS, and sends the detected voltage Vf to the control unit CNT.

The current sensor Sif includes a shunt resistor, a Hall element, or the like, detects a current If flowing from the fuel cell stack FCS to the DC-DC converter CNV, and sends the detected current If to the control unit CNT.

The oxygen concentration detection unit OCD is, for example, an oxygen concentration meter, and detects the oxygen concentration OC of the intake air of the fuel cell system 1' and sends the detected oxygen concentration OC to the control unit CNT.

The storage unit STR includes a RAM (Random Access Memory), a ROM (Read Only Memory), and the like. Note that the storage unit STR stores a target oxygen stoichiometry, an upper limit value, and the like (described below).

The control unit CNT is constituted by a microcomputer or the like, and changes the target generated power Pt in a stepwise manner according to the charging amount Ch of the power storage device B at the time of power generation control of the fuel cell stack FCS.

In addition, at the time of the power generation control of the fuel cell stack FCS, the control unit CNT controls the operation of the auxiliary machines such that the generated power P of the fuel cell stack FCS (the multiplied value of the current If and the voltage Vf) tracks the target generated power Pt. For example, when the fuel cell stack FCS is caused to generate power, the control unit CNT controls the operation of the auxiliary machine such that the difference between the generated power P of the fuel cell stack FCS and the target generated power Pt becomes zero through proportional-integral (PI) control.

In addition, the control unit CNT executes the oxygen stoichiometric reduction avoidance processing at regular intervals. For example, at the time of executing the oxygen stoichiometric reduction avoidance processing, in a case where the oxygen stoichiometry is less than the target oxygen stoichiometry, the control unit CNT executes at least one type of processing among processing to increase the flow rate of the air supplied to the fuel cell stack FCS by controlling the operation of the air compressor ACP and processing to ventilate the interior of the fuel cell system 1' by controlling the operation of the fan F. In a case where the oxygen concentration OC of the air in the fuel cell system 1' is equal to or substantially equal to a standard oxygen concentration OCs, when the flow rate of the air supplied to the fuel cell stack FCS is increased, the oxygen concentration of the air supplied to the fuel cell stack FCS is increased, and the oxygen stoichiometry is increased. In addition, in a case where the oxygen concentration of the air outside the fuel cell system 1' (the vehicle Ve or the stationary generator Sg) is equal to or substantially equal to the standard oxygen concentration OCs, it is assumed that, when the interior of the fuel cell system 1' is ventilated, the oxygen concentration of the air supplied to the fuel cell stack FCS increases, and the oxygen stoichiometry increases. Note that the target oxygen stoichiometry has different values depending on differences in the characteristics of the fuel cell, and is set to 1.0 to 1.3, for example. Further, the target oxygen stoichiometry is an oxygen stoichiometry value which is calculated using the oxygen concentration OC detected by the oxygen concentration detection unit OCD when the generated power P of the fuel cell stack FCS becomes equal to the target generated power Pt.

For example, the control unit CNT sets, as the oxygen stoichiometry, a value obtained by multiplying the air stoichiometry of the fuel cell stack FCS by a value obtained by dividing the oxygen concentration OC detected by the oxygen concentration detection unit OCD by the standard oxygen concentration OCs. That is, the control unit CNT sets a result obtained by calculating the following Formula 1, as the oxygen stoichiometry. Note that it is assumed that the air stoichiometry and the standard oxygen concentration OCs are stored in the storage unit STR in advance. Further, air stoichiometry is a ratio of an actual flow rate of the air supplied from the air compressor ACP to the fuel cell stack FCS to a flow rate of the air supplied from the air compressor ACP to the fuel cell stack FCS when the generated power P of the fuel cell stack FCS becomes equal to the target generated power Pt. In addition, the standard oxygen concentration OCs is an oxygen concentration OC detected by the oxygen concentration detection unit OCD when ventilation of the interior of the fuel cell stack FCS is sufficiently performed. Further, the oxygen stoichiometry is also an index of an oxygen concentration of air supplied to the fuel cell stack FCS.

$$\text{Oxygen stoichiometry} = \text{air stoichiometry} \times \text{oxygen concentration OC} \div \text{standard oxygen concentration OCs...} \quad \text{Formula 1}$$

<Example 1>

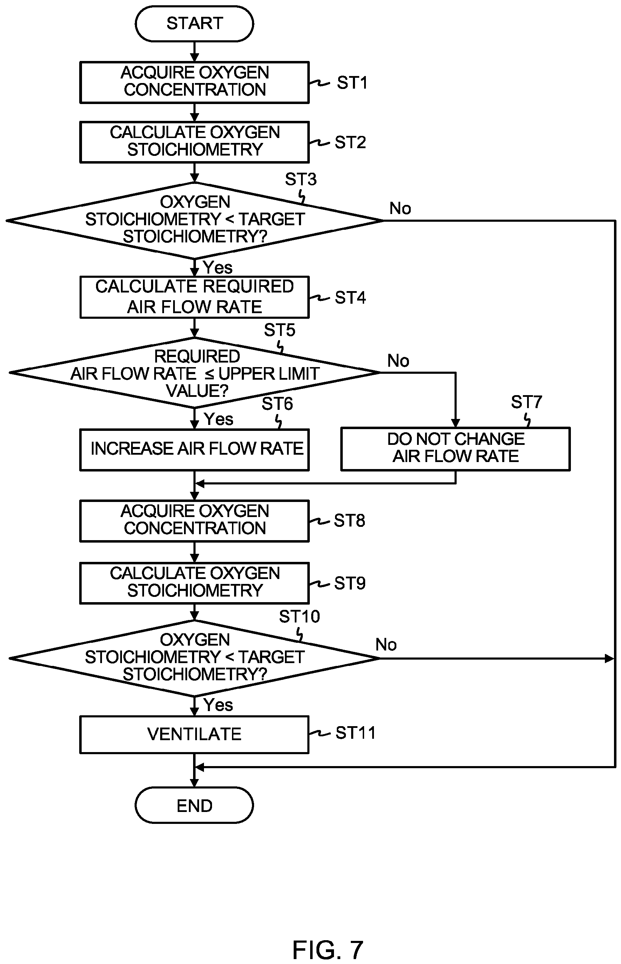

FIG. 7 is a flowchart illustrating an example of the operation of the control unit CNT according to an Example 1.

First, when starting the oxygen stoichiometric reduction avoidance processing, the control unit CNT acquires the oxygen concentration OC detected by the oxygen concentration detection unit OCD (step ST1), and calculates the oxygen stoichiometry by using the oxygen concentration OC acquired in step ST1 (step ST2).

Next, in a case where the oxygen stoichiometry calculated in step ST2 is equal to or higher than the target oxygen stoichiometry (step ST3: No), the control unit CNT ends this instance of oxygen stoichiometric reduction avoidance processing.

On the other hand, in a case where the oxygen stoichiometry calculated in step ST2 is less than the target oxygen stoichiometry (step ST3: Yes), the control unit CNT calculates the necessary air flow rate (step ST4). Note that the required air flow rate is a flow rate of air supplied to the fuel cell stack FCS, which is required to increase the oxygen stoichiometry to the target oxygen stoichiometry. For example, in a case where the air stoichiometry is 1.5, the target oxygen stoichiometry is 1.2, the oxygen concentration OC detected by the oxygen concentration detection unit OCD is 13[%], the standard oxygen concentration OCs is 21[%], and the flow rate of the air supplied to the fuel cell stack FCS when the air stoichiometry is 1 is 100 [NL/min], the control unit CNT first calculates $1.5 \times 13$ [%] $\div$ 21[%] to calculate 0.92 as the oxygen stoichiometry, then calculates $1.5 \times 1.2 = 0.92$ to calculate 1.95 as a new air stoichiometry, and then calculates $1.95 \times 100$ [NL/min] to calculate 195 [NL/min] as the required air flow rate.

In a case where the necessary air flow rate calculated in step ST4 is equal to or less than an upper limit value of the allowable range for the flow rate of the air supplied to the fuel cell stack FCS (step ST5: Yes), the control unit CNT increases the flow rate of the air supplied to the fuel cell stack FCS by controlling the operation of the air compressor ACP (step ST6), and advances to the processing of step ST8. For example, the control unit CNT controls the operation of the air compressor ACP such that the flow rate of the air supplied to the fuel cell stack FCS approaches the necessary air flow rate calculated in step ST4. In this way, by increasing the flow rate of the air supplied to the fuel cell stack FCS, the air stoichiometry is increased, and hence an increase in the oxygen stoichiometry can be expected. Note that the upper limit value is a value obtained in advance using the noise level of the air compressor ACP and the degree of dryness of the flow path of the air in the fuel cell stack FCS by performing experiments, simulations, and the like.

On the other hand, in a case where the necessary air flow rate calculated in step ST4 is greater than the upper limit value (step ST5: No), the control unit CNT advances to the processing of step ST8 without changing the flow rate of the air supplied to the fuel cell stack FCS (step ST7).

Next, in step ST8, the control unit CNT acquires the oxygen concentration OC detected by the oxygen concentration detection unit OCD, and calculates the oxygen stoichiometry by using the oxygen concentration OC acquired in step ST8 (step ST9).

Next, in a case where the oxygen stoichiometry calculated in step ST9 is equal to or higher than the target oxygen stoichiometry (step ST10: No), the control unit CNT ends this instance of oxygen stoichiometric reduction avoidance processing.

On the other hand, in a case where the oxygen stoichiometry calculated in step ST9 is less than the target oxygen stoichiometry (step ST10: Yes), the control unit CNT ventilates the interior of the fuel cell system 1' by controlling the operation of the fan F (step ST11), and ends this instance of oxygen stoichiometric reduction avoidance processing. Note that, in a case where the fan F is already driven in step ST11, the control unit CNT may be configured to increase the rotational speed of the fan F as the difference between the target oxygen stoichiometry and the oxygen stoichiometry becomes larger. In this manner, by controlling the operation of the fan F to perform ventilation of the interior of the fuel cell system 1', air outside the fuel cell system 1' can be taken into the fuel cell system 1' and air in the fuel cell system 1' can be discharged to outside the fuel cell system 1', and hence the oxygen concentration of air sucked into the air compressor ACP can be increased, the oxygen concentration of air supplied to the fuel cell stack FCS can be increased, and an increase in oxygen stoichiometry can be expected.

According to Example 1, by repeatedly executing the oxygen stoichiometric reduction avoidance processing at regular intervals, the oxygen stoichiometry can be brought close to the target oxygen stoichiometry.

Further, according to Example 1, in a case where the oxygen stoichiometry is less than the target oxygen stoichiometry and where the required air flow rate is greater than the upper limit value, the flow rate of the air supplied to the fuel cell stack FCS can be prevented from being increased, and hence the load applied to the air compressor ACP can be reduced, and drying in the fuel cell stack FCS can be suppressed.

<Example 2>

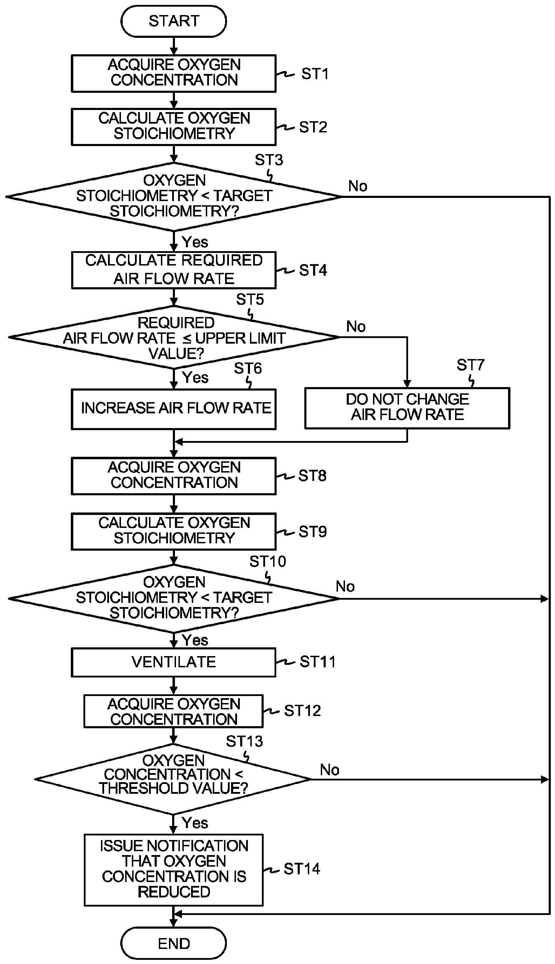

FIG. 8 is a flowchart illustrating an example of the operation of the control unit CNT according to an Example 2. Note that steps ST1 to ST11 in the flowchart illustrated in FIG. 8 are similar to steps ST1 to ST11 in the flowchart illustrated in FIG. 7, and thus descriptions thereof will be omitted. Furthermore, in Example 2, it is assumed that the fuel cell system 1' illustrated in FIG. 5 or 6 includes a notification unit (not illustrated) including a warning light, a buzzer, or the like.

In step ST11, after ventilating the interior of the fuel cell system 1', the control unit CNT acquires the oxygen concentration OC detected by the oxygen concentration detection unit OCD (step ST12), and compares the oxygen concentration OC acquired in step ST12 with a predetermined oxygen concentration threshold value (step ST13). The threshold value is a predetermined concentration used for issuing a warning.

Next, in a case where the oxygen concentration OC acquired in step ST12 is equal to or higher than the threshold value (step ST13: No), the control unit CNT ends this instance of oxygen stoichiometric reduction avoidance processing.

On the other hand, in a case where the oxygen concentration OC acquired in step ST12 is less than the threshold value (step ST13: Yes), the control unit CNT causes the notification unit to issue a notification to outside the fuel cell system 1' (vehicle Ve or the stationary generator Sg) that the oxygen concentration of the air outside the fuel cell system 1' is at least lower than the standard oxygen concentration (step ST14), and ends this instance of oxygen stoichiometric reduction avoidance processing.

As described above, according to Example 2, the configuration is such that, in a case where the oxygen concentration OC does not become equal to or higher than the threshold value even though the flow rate of the air supplied to the fuel cell stack FCS has increased or the interior of the fuel cell system 1' has been ventilated, notification of a reduction in the oxygen concentration of the air outside the fuel cell system 1' is issued to outside the fuel cell system 1', and hence it is possible to notify a user near a vehicle Ve that includes the fuel cell system 1', or the stationary generator Sg, that the oxygen concentration of the air around the fuel cell system 1' is reduced.

Further, according to Example 2, the configuration is such that it is determined whether or not the oxygen concentration OC acquired after executing the processing to ventilate the interior of the fuel cell system 1' is less than the threshold value, and hence it is possible to suppress erroneous determination that the oxygen concentration OC is less than the threshold value due to the influence of noise included in the oxygen concentration OC detected by the oxygen concentration detection unit OCD, and it is possible to suppress erroneous notification outside the fuel cell system 1'.

Further, the flowchart shown in FIG. 7 or 8 may be configured such that, in a case where the oxygen stoichiometry is less than the target oxygen stoichiometry, the interior of the fuel cell system 1' is ventilated after the flow rate of the air supplied to fuel cell stack FCS is increased, but the flow rate of the air supplied to fuel cell stack FCS is increased after the interior of the fuel cell system 1' is ventilated. That is, the configuration may be such that steps ST1 to ST7 are executed after executing steps ST8 to ST11. Note that the priority order of the processing to increase the flow rate of the air supplied to the fuel cell stack FCS and the processing to ventilate the interior of the fuel cell system 1' may be determined by the time taken from the start of the control of the air compressor ACP or the fan F by the control unit CNT to the start of the operation of the air compressor ACP or the fan F or the increase amount per unit time of the oxygen stoichiometry accompanying the operation of the air compressor ACP or the fan F. For example, in a case where the time required from the start of the control of the air compressor ACP by the control unit CNT to the start of the operation of the air compressor ACP is shorter than the time required from the start of the control of the fan F by the control unit CNT to the start of the operation of the fan F, the processing to increase the flow rate of the air supplied to the fuel cell stack FCS is prioritized over the processing to ventilate the interior of the fuel cell system 1'. In a case where the increase amount per unit time of the oxygen stoichiometry accompanying the operation of the fan F is greater than the increase amount per unit time of the oxygen stoichiometry accompanying the operation of the air compressor ACP, the processing to ventilate the interior of the fuel cell system 1' is prioritized over the processing to increase the flow rate of air supplied to the fuel cell stack FCS.

The flowchart shown in FIG. 7 or FIG. 8 may be configured such that, in a case where the state in which the oxygen stoichiometry is less than the target oxygen stoichiometry continues, two types of processing, namely processing to increase the flow rate of the air supplied to the fuel cell stack FCS and processing to ventilate the interior of the fuel cell system 1', are executed; however, in a case where the oxygen stoichiometry is less than the target oxygen stoichiometry, one of the two types of processing among the processing to increase the flow rate of the air supplied to the fuel cell stack FCS and the processing to ventilate the interior of the fuel cell system 1' is executed.

Incidentally, in a case where the fuel cell system 1' is provided to a vehicle Ve in which the air supply port is not provided to the front surface or a vehicle Ve having a relatively slow traveling speed, or in a case where the fuel cell system 1' is provided to the stationary generator Sg, the outside air cannot be actively taken into the fuel cell system 1', and the oxygen concentration of the air supplied from the air compressor ACP to the fuel cell stack FCS becomes relatively low, and hence the concentration overvoltage will likely increase and the voltage Vf of the fuel cell stack FCS will likely be reduced.

In a case where the temperature of the refrigerant passing through the radiator R is relatively low and the fan F does not need to be driven, the outside air cannot be actively taken into the fuel cell system 1', and the oxygen concentration of the air supplied from the air compressor ACP to the fuel cell stack FCS becomes relatively low, and hence the concentration overvoltage will likely increase and the voltage Vf of the fuel cell stack FCS will likely be reduced.

Further, in a case where the power required from the load Lo to the fuel cell system 1' is relatively large, the concentration overvoltage will likely increase, and the voltage Vf of the fuel cell stack FCS will likely be reduced.

In addition, in general, the oxygen concentration in the atmosphere (the oxygen concentration of the air outside the vehicle Ve or the oxygen concentration of the air outside the building covering the stationary generator Sg) is about 21[%], but because the oxygen contained in the air in the fuel cell stack FCS is consumed by power generation, the oxygen concentration of the air discharged from the fuel cell stack FCS is lower than the oxygen concentration in the atmosphere. Therefore, in a case where the air compressor ACP sucks in the air discharged from the fuel cell stack FCS, the oxygen concentration of the air supplied from the air compressor ACP to the fuel cell stack FCS becomes relatively low, and hence the concentration overvoltage will likely increase and the voltage Vf of the fuel cell stack FCS will likely be reduced.

When these conditions overlap with each other, the voltage Vf of the fuel cell stack FCS is more likely to be reduced.

Therefore, the fuel cell system 1' according to the embodiment is configured to execute at least one type of processing among the processing to increase the flow rate of the air supplied from the air compressor ACP to the fuel cell system 1' and the processing to ventilate the interior of the fuel cell system 1' in a case where the oxygen stoichiometry, which is an index of the oxygen concentration of the air supplied to the fuel cell stack FCS, is less than the target oxygen stoichiometry. When the processing to increase the flow rate of the air supplied to the fuel cell stack FCS or the processing to ventilate the interior of the fuel cell system 1' is executed, the oxygen concentration of the air supplied to fuel cell stack FCS can be increased. Thus, in a case where the oxygen stoichiometry is less than the target oxygen stoichiometry, the oxygen concentration of the air supplied to the fuel cell stack can be increased, and a reduction in the voltage of the fuel cell stack can be suppressed. That is, with the fuel cell system 1' according to the embodiment, the power generation of fuel cell stack FCS can be stabilized in an environment in which the oxygen concentration of the air supplied to fuel cell stack FCS readily decreases.

Note that the present disclosure is not limited to or by the above embodiments, and various improvements and changes can be made without departing from the spirit of the present disclosure.

A fuel cell system according to the above-described embodiment includes a fuel cell stack, an air compressor that supplies air to the fuel cell stack, and a control unit. The control unit includes a state detection unit that detects that an oxygen concentration is lower than a predetermined concentration or detects a phenomenon caused by the oxygen concentration being lower than the predetermined concentration. In a case where it is detected by the state detection unit that the oxygen concentration is lower than the predetermined concentration or where the phenomenon is detected, the control unit performs processing to increase a flow rate of air supplied to the fuel cell stack or processing to ventilate the interior of the fuel cell stack by controlling an operation of a ventilation unit.

Further, the fuel cell system may include an auxiliary machine for causing the fuel cell stack to generate power, and the ventilation unit, wherein the state detection unit may be a voltage detection unit, and wherein the control unit may be configured to control operation of the ventilation unit according to a temperature of the fuel cell stack or the auxiliary machine in a normal mode, and drive the ventilation unit in a ventilation mode, and wherein the control unit may be configured to cause a transition from the normal mode to the ventilation mode when a voltage pertaining to the fuel cell stack becomes equal to or less than a first threshold value.

Thus, when the voltage of the fuel cell stack becomes equal to or lower than the first threshold due to the decrease in the oxygen concentration in the fuel cell system, the ventilation unit can be driven to ventilate the interior of the fuel cell system, and hence the outside air can be taken into the fuel cell system and the air discharged from the fuel cell stack can be discharged to outside the fuel cell system, and thus the decrease in the oxygen concentration in the fuel cell system can be suppressed. In a case where the voltage of the fuel cell stack is not equal to or less than the first threshold value, the operation of the ventilation unit can be controlled according to the temperature of the fuel cell stack or the auxiliary machine in the normal mode, and hence the temperature of the fuel cell stack or the auxiliary machine can be adjusted within a rated temperature range, and the power generation of the fuel cell stack can be stabilized.

Further, the control unit may be configured to drive the ventilation unit until a predetermined driving time elapses after causing the transition from the normal mode to the ventilation mode, and subsequently, when the voltage pertaining to the fuel cell stack becomes equal to or greater than a second threshold value larger than the first threshold value, to cause a transition from the ventilation mode to the normal mode.

Thus, when the voltage of the fuel cell stack becomes larger than the first threshold value after the transition from the normal mode to the ventilation mode, frequent switching between the normal mode and the ventilation mode can be suppressed in comparison with the case where the transition from the ventilation mode to the normal mode is performed, and hence the power generation of the fuel cell stack can be further stabilized.

Further, the voltage detection unit may be configured to detect the respective voltages of the plurality of fuel cells, and the control unit may be configured to set an average value of the voltages detected by the voltage detection unit as a voltage pertaining to the fuel cell stack.

Thus, unnecessary ventilation of the interior of the fuel cell system is suppressed, and hence the power generation of the fuel cell stack can be further stabilized.

Furthermore, the ventilation unit may be a fan that increases a heat radiation amount of a radiator that exchanges heat of a refrigerant, which is warmed by heat generation of the fuel cell stack, with air, and an exhaust port through which air is discharged from the fuel cell stack may be disposed on a leeward side of an air flow formed by the ventilation unit with respect to an intake port of the fuel cell stack.

Thus, because the air discharged from the exhaust port can be prevented from being supplied to the fuel cell stack, a decrease in the oxygen concentration of the air supplied to the fuel cell stack can be suppressed, and a decrease in the oxygen concentration in the fuel cell system can be further suppressed.

Furthermore, the state detection unit may be an oxygen concentration detection unit, the control unit may be configured to control operations of the air compressor and the ventilation unit, and the control unit may be configured to execute at least one type of processing among processing to increase a flow rate of air supplied to the fuel cell system by controlling the operation of the air compressor and processing to ventilate the interior of the fuel cell system by controlling the operation of the ventilation unit, in a case where oxygen stoichiometry, which is a value obtained by multiplying the air stoichiometry of the fuel cell stack by a value obtained by dividing the oxygen concentration detected by the oxygen concentration detection unit by a standard oxygen concentration, is less than a target oxygen stoichiometry.

Thus, in a case where the oxygen stoichiometry is less than the target oxygen stoichiometry, at least one of the processing to increase the flow rate of the air supplied to the fuel cell stack and the processing to ventilate the interior of the fuel cell system can be executed, and hence the oxygen concentration of the air supplied to the fuel cell stack can be increased, and a reduction in the voltage of the fuel cell stack can be suppressed.

In addition, the control unit may be configured to execute the processing to increase the flow rate of the air in a case where the oxygen stoichiometry is less than the target oxygen stoichiometry and in a case where the flow rate of the air supplied to the fuel cell stack, which is necessary to increase the oxygen stoichiometry to the target oxygen stoichiometry, is equal to or less than an upper limit value of an allowable range for the flow rate of the air supplied to the fuel cell stack.

Thus, in a case where the oxygen stoichiometry is less than the target oxygen stoichiometry and in a case where the flow rate of the air supplied to the fuel cell stack, which is necessary to increase the oxygen stoichiometry to the target oxygen stoichiometry, is greater than the upper limit value, the flow rate of the air supplied to the fuel cell stack can be prevented from being increased, and hence the load applied to the air compressor can be reduced, and drying of the interior of the fuel cell stack can be suppressed.

Furthermore, the ventilation unit may be a fan that increases a heat radiation amount of a radiator that exchanges heat of a refrigerant, which is warmed by heat generation of the fuel cell stack, with air.

Thus, in a case where the fan that increases the heat radiation amount of the radiator is provided to the fuel cell system in advance, the fan can be used as the ventilation unit, and hence an increase in the manufacturing costs of the fuel cell system can be suppressed.

Further, the fuel cell system may include a notification unit, and the control unit may be configured to cause the notification unit to issue notification to outside the fuel cell system to the effect that the oxygen concentration of the air outside the fuel cell system has decreased in a case where the oxygen concentration detected by the oxygen concentration detection unit is lower than a predetermined concentration after executing the processing to ventilate the interior of the fuel cell system.

Thus, when the oxygen concentration of the air around the fuel cell system decreases, a notification to that effect can be issued to outside the fuel cell system, and hence it is possible to notify a vehicle that includes the fuel cell system or a user near a stationary generator that the oxygen concentration of the air around the fuel cell system has decreased.

In addition, the configuration is such that it is determined whether or not the oxygen concentration is lower than the predetermined concentration after executing the processing to ventilating the interior of the fuel cell system, and hence it is possible to suppress an erroneous determination that the oxygen concentration is lower than the predetermined concentration due to the effect of noise included in the oxygen concentration detected by the oxygen concentration detection unit, and thus it is possible to suppress erroneous notification to outside the fuel cell system.

The present disclosure stabilizes power generation of a fuel cell stack (FCS) in an environment in which an oxygen concentration in a fuel cell system (1) readily decreases. In a case where it is detected that the oxygen concentration is lower than a predetermined concentration or where a phenomenon caused by the oxygen concentration being lower than the predetermined concentration is detected, processing to increase a flow rate of air supplied to the fuel cell stack (FCS) or processing to ventilate the interior of the fuel cell stack (FCS) by controlling an operation of a ventilation unit (F) is performed.

**Claims**

1. A fuel cell system, comprising:

   a fuel cell stack;
   an air compressor that supplies air to the fuel cell stack; and
   a control unit,
   wherein the control unit includes a state detection unit that detects that an oxygen concentration is lower than a predetermined concentration or detects a phenomenon caused by the oxygen concentration being lower than the predetermined concentration, and
   wherein, in a case where the state detection unit detects that the oxygen concentration is lower than the predetermined concentration or detects the phenomenon, the control unit performs processing to increase a flow rate of air supplied to the fuel cell stack or processing to ventilate the interior of the fuel cell stack by controlling an operation of a ventilation unit.

2. The fuel cell system according to claim 1, comprising:

   an auxiliary machine for causing the fuel cell stack to generate power; and
   the ventilation unit,
   wherein the state detection unit is a voltage detection unit,
   wherein the control unit controls the operation of the ventilation unit according to a temperature of the fuel cell stack or the auxiliary machine in a normal mode, and drives the ventilation unit in a ventilation mode, and
   wherein the control unit causes a transition from the normal mode to the ventilation mode when a voltage pertaining to the fuel cell stack becomes equal to or less than a first threshold value.

3. The fuel cell system according to claim 2, wherein the control unit drives the ventilation unit until a predetermined driving time elapses after causing the transition from the normal mode to the ventilation mode, and subsequently, when the voltage pertaining to the fuel cell stack becomes equal to or greater than a second threshold value larger than the first threshold value, causes a transition from the ventilation mode to the normal mode.

4. The fuel cell system according to claim 2,

   wherein the voltage detection unit detects respective voltages of the plurality of fuel cells, and
   wherein the control unit sets an average value of the voltages detected by the voltage detection unit as a voltage pertaining to the fuel cell stack.

5. The fuel cell system according to claim 2,

   wherein the ventilation unit is a fan that increases a heat radiation amount of a radiator that exchanges heat of a refrigerant, which is warmed by heat generation of the fuel cell stack, with air, and
   wherein an exhaust port through which air is discharged from the fuel cell stack is disposed on a leeward side of an air flow formed by the ventilation unit with respect to an intake port of the fuel cell stack.

6. The fuel cell system according to claim 1,

   wherein the state detection unit is an oxygen concentration detection unit,
   wherein the control unit controls operations of the air compressor and the ventilation unit, and

wherein the control unit executes at least one type of processing among processing to increase a flow rate of air supplied to the fuel cell system by controlling the operation of the air compressor and processing to ventilate the interior of the fuel cell system by controlling the operation of the ventilation unit, in a case where oxygen stoichiometry, which is a value obtained by multiplying the air stoichiometry of the fuel cell stack by a value obtained by dividing the oxygen concentration detected by the oxygen concentration detection unit by a standard oxygen concentration, is less than a target oxygen stoichiometry.

7. The fuel cell system according to claim 6, wherein the control unit executes the processing to increase the flow rate of the air in a case where the oxygen stoichiometry is less than the target oxygen stoichiometry and in a case where the flow rate of the air supplied to the fuel cell stack, which is necessary to increase the oxygen stoichiometry to the target oxygen stoichiometry, is equal to or less than an upper limit value of an allowable range for the flow rate of the air supplied to the fuel cell stack.

8. The fuel cell system according to claim 6, wherein the ventilation unit is a fan that increases a heat radiation amount of a radiator that exchanges heat of a refrigerant, which is warmed by heat generation of the fuel cell stack, with air.

9. The fuel cell system according to claim 6, comprising:

a notification unit,
wherein the control unit causes the notification unit to issue a notification to outside the fuel cell system to the effect that the oxygen concentration of the air outside the fuel cell system has decreased in a case where the oxygen concentration detected by the oxygen concentration detection unit is lower than a predetermined concentration after executing the processing to ventilate the interior of the fuel cell system.

FIG. 1

FIG. 2

START

CALCULATE VOLTAGE V — S1

VOLTAGE V
≤ THRESHOLD VALUE
Vth1?  S2

No

Yes

CAUSE TRANSITION
FROM NORMAL MODE
TO VENTILATION MODE — S3

HAS
PREDETERMINED DRIVING
TIME ELAPSED?  S4

No

Yes

CALCULATE VOLTAGE V — S5

VOLTAGE V
≥ THRESHOLD VALUE
Vth2?  S6

No

Yes

CAUSE TRANSITION
FROM VENTILATION MODE
TO NORMAL MODE — S7

END

FIG. 3

FIG. 4A

FIG. 4B

FIG. 4C

FIG. 4D

FIG. 5

FIG. 6

EP 4 329 023 A1

START

ACQUIRE OXYGEN
CONCENTRATION — ST1

CALCULATE OXYGEN
STOICHIOMETRY — ST2

ST3

OXYGEN
STOICHIOMETRY < TARGET
STOICHIOMETRY? — No

Yes

CALCULATE REQUIRED
AIR FLOW RATE — ST4

ST5

REQUIRED
AIR FLOW RATE ≤ UPPER LIMIT
VALUE? — No

Yes — ST6

ST7

INCREASE AIR FLOW RATE

DO NOT CHANGE
AIR FLOW RATE

ACQUIRE OXYGEN
CONCENTRATION — ST8

CALCULATE OXYGEN
STOICHIOMETRY — ST9

ST10

OXYGEN
STOICHIOMETRY < TARGET
STOICHIOMETRY? — No

Yes

VENTILATE — ST11

END

FIG. 7

Europäisches
Patentamt

European
Patent Office

Office européen
des brevets

# EUROPEAN SEARCH REPORT

Application Number

EP 23 19 3388

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/333348 A1 (BYUN JUNG-YEON [KR] ET AL) 19 November 2015 (2015-11-19) * paragraphs [0043], [0047], [0048] – [0053] * | 1,6,8,9 | INV.<br>H01M8/04029<br>H01M8/04089<br>H01M8/0444<br>H01M8/04537 |
| X | US 2003/022043 A1 (MCELROY JAMES F [US]) 30 January 2003 (2003-01-30) | 1-4,6-8 | H01M8/04746<br>H01M8/2465 |
| A | * paragraph [0046] * | 5 | |
| A | JP 2002 008687 A (FUJI ELECTRIC CO LTD) 11 January 2002 (2002-01-11) * figure 1 * | 1-9 | |

TECHNICAL FIELDS
SEARCHED      (IPC)

H01M

The present search report has been drawn up for all claims

| Place of search | Date of completion of the search | Examiner |
|---|---|---|
| Munich | 19 January 2024 | Raimondi, Fabio |

EPO FORM 1503 03.82 (P04C01)

## ANNEX TO THE EUROPEAN SEARCH REPORT
## ON EUROPEAN PATENT APPLICATION NO.

EP 23 19 3388

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2024

| Patent document cited in search report | | Publication date | Patent family member(s) | Publication date |
|---|---|---|---|---|
| US 2015333348 | A1 | 19-11-2015 | DE 102014224611 A1 | 19-11-2015 |
| | | | KR 20150132985 A | 27-11-2015 |
| | | | US 2015333348 A1 | 19-11-2015 |
| US 2003022043 | A1 | 30-01-2003 | NONE | |
| JP 2002008687 | A | 11-01-2002 | NONE | |

For more details about this annex : see Official Journal of the European Patent Office, No. 12/82

**REFERENCES CITED IN THE DESCRIPTION**

**Patent documents cited in the description**

- JP 2004273162 A

- JP 2010257580 A